# EUROPÄISCHE PATENTSCHRIFT

(11) **EP 2 834 199 B1**
(45) Veröffentlichungstag und Bekanntmachung des Hinweises auf die Patenterteilung: **13.09.2017**
(21) Anmeldenummer: 13711349.4
(22) Anmeldetag: 20.03.2013
(51) Int. Cl.: C03B 19/10, C03B 20/00, C03B 19/09

(54) **VERFAHREN ZUR HERSTELLUNG SYNTHETISCHER QUARZGLASKÖRNUNG**
METHOD FOR PRODUCING SYNTHETIC QUARTZ GLASS GRANULES
PROCÉDÉ DE FABRICATION DE GRAINS DE VERRE DE SILICE SYNTHÉTIQUES

(30) Priorität: 05.04.2012 DE 102012006914
(43) Veröffentlichungstag der Anmeldung: 11.02.2015
(73) Patentinhaber: Heraeus Quarzglas GmbH & Co. KG, 63450 Hanau (DE)
(72) Erfinder: LEHMANN, Walter, 04155 Leipzig (DE); KAYSER, Thomas, 04105 Leipzig (DE)
(74) Vertreter: Staudt, Armin Walter
(86) Internationale Anmeldenummer: PCT/EP2013/055772
(87) Internationale Veröffentlichungsnummer: WO 2013/149831

(56) Entgegenhaltungen:
- WO-A1-01/46077
- WO-A1-88/03914
- DE-A1-102005 045 051
- DE-A1-102010 021 693
- US-A- 3 775 077
- US-A- 4 032 315
- US-A1- 2003 226 376

## Beschreibung

Die vorliegende Erfindung betrifft ein Verfahren zur Herstellung synthetischer Quarzglaskörnung durch Verglasen eines rieselfähigen SiO₂-Granulats.

Die dichte Quarzglaskörnung ist zur Herstellung von Quarzglasbauteilen, wie Tiegeln, Rohren, Haltern, Glocken, Reaktoren für die Halbleiter- oder Lampenfertigung und der chemischen Verfahrenstechnik einsetzbar. Neben Reinheit und chemischer Beständigkeit spielt bei derartigen Fertigungsprozessen häufig eine hohe Temperaturstabilität eine entscheidende Rolle. Als unterer Erweichungspunkt für reines Quarzglas werden in der Literatur Temperaturwerte um 1150 °C angegeben. Häufig liegen die erforderlichen Prozesstemperaturen jedoch höher, so dass es zu plastischen Verformungen der Quarzglasbauteile kommen kann.

### Stand der Technik

Es stellt sich grundsätzlich das Problem, das poröse SiO₂-Granulat möglichst blasenfrei zu verdichten. Die porösen Granulatteilchen sind Agglomerate von SiO₂-Teilchen, wie sie beispielsweise bei der Herstellung von synthetischem Quarzglas durch Polymerisation, Polykondensation, Fällung oder CVD-Abscheideverfahren erhalten werden. Wegen ihrer geringen Schüttdichte ist das direkte Einschmelzen derartiger SiO₂-Teilchen problematisch, so dass sie in der Regel zunächst durch Granulieren vorverdichtet werden. Als Beispiele seien die Rollgranulation, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung genannt.

Die dabei anfallenden diskreten, mechanisch und gegebenenfalls auch bereits thermisch vorverdichteten Partikel setzen sich somit aus einer Vielzahl von Primärpartikeln zusammen und werden hier als "SiO₂-Granulatteilchen" bezeichnet. In ihrer Gesamtheit bilden sie das poröse "SiO₂-Granulat".

Beim Einschmelzen des "SiO₂-Granulats" zu Quarzglas besteht die Gefahr, dass sich geschlossene, gasgefüllte Hohlräume bilden, die aus der hochviskosen Quarzglasmasse nicht oder nur sehr langsam zu entfernen sind und die so zu Blasen im Quarzglas führen. Deshalb ist es für anspruchsvolle Anwendungen in der Regel notwendig, aus den porösen Granulatteilchen dichte, verglaste Quarzglasteilchen zu erzeugen. Der Stand der Technik kennt eine Vielzahl unterschiedlicher Techniken zum Erreichen dieses Ziels.

So wird in der EP 1 076 043 A2 vorgeschlagen, poröses SiO₂-Granulat in eine Brennerflamme einzurieseln, um es darin fein zu verteilen und bei Temperaturen von 2000 bis 2500 °C zu verglasen. Das Granulat wird vorzugsweise durch Sprüh- oder Nassgranulation von Filterstaub erhalten und hat Korngrößen im Bereich von 5 bis 300 µm. Vor dem Verglasen kann es durch Behandlung mit Mikrowellenstrahlung erhitzt und vorverdichtet werden.

Der Sintergrad eines gegebenen Granulatteilchens hängt von seiner Teilchengröße und dem Wärmeeintrag ab, der wiederum von der Aufenthaltsdauer in der Brennerflamme und der Flammentemperatur bestimmt wird. Das Granulat hat jedoch in der Regel eine gewisse Teilchengrößenverteilung, und die Brenngasflamme hat Bereiche unterschiedlicher Strömungsgeschwindigkeiten und Flammentemperaturen. Dies führt zu ungleichmäßigen und wenig reproduzierbaren Sintergraden. Es besteht außerdem die Gefahr, dass die Quarzglasteilchen durch die Brenngase verunreinigt werden. In dem Zusammenhang ist besonders die Beladung mit Hydroxylgruppen bei Einsatz wasserstoffhaltiger Brenngase zu nennen, was mit einer vergleichsweise niedrigen Viskosität des Quarzglases einhergeht.

In der EP 1 088 789 A2 wird zum Verglasen von porösem SiO₂-Granulat vorgeschlagen, das synthetisch erzeugte Granulat zunächst durch Erhitzen in HCl-haltiger Atmosphäre in einem Drehrohrofen zu reinigen, anschließend in einem Fließbett zu kalzinieren und dann in einer vertikalen Fließbettapparatur oder in einem Tiegel unter Vakuum oder Helium oder Wasserstoff zu synthetischer Quarzglaskörnung zu verglasen.

Hierbei handelt es sich um ein diskontinuierliches Verglasungsverfahren, einhergehend mit einer großen thermischen Trägheit des Ofens und demzufolge langen Prozessdauem mit dementsprechend hohem Zeit- und Kostenaufwand mit geringem Durchsatz und einem im Ergebnis relativ teueren Granulat.

Bei einem ähnlichen Verfahren gemäß der JP 10287416 A wird partikelförmiges SiO₂-Gel mit Durchmessern im Bereich von 10 und 1.000 µm kontinuierlich in einem Drehrohrofen verdichtet. Dieser umfasst ein Drehrohr aus Quarzglas mit einer Länge von 2 m und einem Innendurchmesser von 200 mm. Das Drehrohr wird mittels Heizern von außen beheizt und ist in mehrere Temperaturzonen aufgeteilt, die den Temperaturbereich von 50 °C bis 1.100 °C abdecken. Das partikelförmige SiO₂-Gel mit Partikelgrößen zwischen 100 und 500 µm wird in dem mit 8 U/min rotierenden Drehrohr durch Zufuhr eines sauerstoffhaltigen Gases von organischen Bestandteilen befreit und zu SiO₂-Pulver gesintert. Die Ofenatmosphäre beim Sintern enthält Sauerstoff und fakultativ Argon, Stickstoff oder Helium.

Das danach erhaltene SiO₂-Pulver enthält jedoch noch Silanolgruppen in hoher Konzentration von nicht weniger als 1.000 Gew.-ppm. Zu deren Beseitigung wird das SiO₂-Pulver abschließend bei einer höheren Temperatur von 1.300 °C in einem Quarzglastiegel mit einem Innendurchmesser von 550 mm in Chargen von 130 kg kalziniert und dicht gesintert.

Die thermische Stabilität eines Drehrohres aus Quarzglas beschränkt dessen Einsatz bei hoher Temperatur zum Verglasen der Granulatteilchen. Beim Verglasen im Quarzglastiegel kann es jedoch zu Verbackungen der sinternden Granulatteilchen kommen, die zu einer undefinierten, porenhaltigen Quarzglasmasse führen.

Auch die WO 88/03914 A1 lehrt die Reduktion der BET-Oberfläche eines amorphen, porösen SiO₂-Pulvers unter Einsatz eines Drehrohrofens in einer Helium und/oder Wasserstoff enthaltender Atmosphäre. Bei einer ersten Verfahrensweise wird feiner SiO₂-Sootstaub in einen Drehrohrofen gegeben, unter Luft auf 1200 °C aufgeheizt und bei dieser Temperatur 1 h lang gehalten. Ergebnis dieses Prozesses soll ein rieselfähiges, sphärisches Granulat mit Korngrößen von 0,1 bis 5 mm und einer BET-Oberfläche < 1 m²/g sein. Sootstaub ist jedoch nicht rieselfähig, extrem sinteraktiv und er kann leicht verblasen werden. Die Verarbeitung von Sootstaub in einem Drehrohrofen gestaltet sich daher äußerst problematisch. Bei einer Abwandlung dieser Verfahrensweise wird vorgeschlagen, SiO₂-Sootstaub mit Wasser zu vermischen, so dass eine feuchte krümelige Masse erhalten wird. Diese Masse wird in einen Drehrohrofen gegeben und bei einer Temperatur von 600 °C zu einem Pulver mit Korngrößen von 0,1 bis 3 mm verdichtet. Das so vorverdichtete SiO₂-Pulver wird anschließend in einem separaten Ofen verglast.

Aus der DE 10 2004 038 602 B3 ist ein Verfahren zur Herstellung von elektrogeschmolzenem, synthetischem Quarzglas für den Einsatz in der Lampen- und Halbleiterfertigung bekannt. Als Ausgangsmaterial für das elektrogeschmolzene Quarzglas wird thermisch verdichtetes SiO₂-Granulat eingesetzt. Das Granulat wird durch Granulation einer wässrigen Suspension aus amorphen, nanoskaligen, durch Flammenhydrolyse von SiCl₄ erzeugten pyrogenen SiO₂-Partikeln gebildet.

Zwecks Viskositätserhöhung wird das SiO₂-Granulat mit Al₂O₃ dotiert, indem der Suspension Nanopartikel aus pyrogen hergestelltem Al₂O₃ oder ein lösliches Aluminiumsalz beigefügt wird.

Es werden rundliche Granulat-Körner mit Außendurchmessern im Bereich zwischen 160 µm und 1000 µm erhalten. Das Granulat wird bei ca. 400 °C im Drehrohrofen getrocknet und bei einer Temperatur von etwa 1420 °C bis auf eine BET-Oberfläche von ca. 3 m²/g verdichtet.

Zum vollständigen Verglasen werden die Einzelkörner des Granulats anschließend unter verschiedenen Atmosphären, wie Helium, Wasserstoff oder Vakuum vollständig verglast. Das Heizprofil beim Verglasen der Granulate umfasst jeweils ein Aufheizen auf 1400 °C mit einer Aufheizrate von 5°C/min und eine Haltezeit von 120 min. Nach dieser Behandlung sind die einzelnen Granulatkörner in sich verglast. Die Körner liegen einzeln vor, ohne zu einer Masse verschmolzen zu sein.

Das Granulat wird in einem Elektroschmelzprozess zu Quarzglas weiterverarbeitet, wie beispielsweise in einem Tiegel zu einem Formkörper erschmolzen oder in einem Tiegelziehverfahren kontinuierlich zu einem Strang gezogen.

Auch hier erfolgt das Verglasen in einem separaten Ofen, so dass es sich um ein diskontinuierliches Verfahren mit mehreren, kostenintensiven Aufheizprozessen handelt.

Die US 4,225,443 A beschreibt den Einsatz eines Drehrohrofens zur Herstellung von Glaspartikeln für Filterzwecke. Fein gemahlenes Glaspulver mit Partikelgrößen um 100 µm wird mit Wasser und Bindemittel vermischt und zu Granulat-Partikeln mit Partikelgrößen um 300 µm - 4,5 mm verarbeitet. Diese Partikel werden in einem Drehrohrofen mit einem Drehrohr aus Mullit zu im Wesentlichen sphärischen Pellets mit Größen um 500 - 4000 µm gesintert.

Die Druckschrift WO 01/46077 A1 betrifft die Herstellung eines Quarzglastiegels mit transparenter Innenschicht. Es kommen dafür verglaste SiO₂-Granulate ausgehend von pyrogen hergestellten und mit Al₂O₃ dotierten SiO₂ zum Einsatz. Nach Granulation und Trocknung erfolgt ein Reinigungsschritt bei einer Temperatur von 1200°C in einem Gemisch von Cl₂/HCl in einem Drehrohrofen. Anschließend wird das gereinigte SiO₂-Granulat bei einer Haltezeit von einer Stunde bei einer Temperatur von 1420°C unter Wasserstoff verglast, wobei keine Angaben über das Ofensystem während der Verglasung gemacht werden. Bevor das verglaste Granulat als Innenschichtmaterial bei der Tiegelherstellung eingesetzt wird, folgt noch eine Nachbehandlung durch Tempern bei 1000°C im Vakuum, wodurch metastabile OH-Gruppen entfernt werden. Die Dauer der Nachbehandlung ist WO 01/46077 A1 nicht zu entnehmen.

### Technische Aufgabenstellung

Der Erfindung liegt die Aufgabe zugrunde, ein Verfahren anzugeben, das ausgehend von porösem SiO₂-Granulat eine preisgünstige Herstellung dichter, synthetischer Quarzglaskörnung ermöglicht, die zum Einschmelzen blasenfreier Bauteile aus Quarzglas geeignet ist.

### Allgemeine Beschreibung der Erfindung

Diese Aufgabe wird erfindungsgemäß durch ein Verfahren mit folgenden Verfahrensschritten gelöst:
(a) Granulation pyrogen hergestellter Kieselsäure unter Bildung des SiO₂-Granulats aus porösen Granulatteilchen,
(b) Trocknen des SiO₂-Granulats,
(c) Reinigen des SiO₂-Granulats durch Erhitzen in einer halogenhaltigen Atmosphäre,
(d) Verglasen des gereinigten SiO₂-Granulats unter einem Behandlungsgas, das mindestens 30 Vol.-% Helium und/oder Wasserstoff enthält unter Bildung verglaster Quarzglaskörnung, und
(e) Nachbehandeln der nach dem Verglasen gemäß Verfahrensschritt (d) erhaltenen verglasten Quarzglaskörnung (15) unter einer Atmosphäre, die weniger als 20% Helium oder Wasserstoff enthält bei einer Behandlungstemperatur von 300 °C oder mehr, und während einer Behandlungsdauer von mindestens 10 Minuten, wobei das Reinigen und Verglasen des SiO₂-Granulats jeweils in einem um eine Mittelachse rotierenden Drehrohr eines Drehrohrofens erfolgen, und wobei das Drehrohr beimVerglasen gemäß Verfahrensschritt (d) eine Innenwandung aus einem keramischen Werkstoff aufweist

Das SiO₂-Granulat wird erhalten, indem pyrogen hergestellte Kieselsäure - im Folgenden auch als "SiO₂-Sootstaub" bezeichnet - anhand üblicher Granulierverfahren vorverdichtet wird. Die Granulierung kann unter Einsatz eines Drehrohres erfolgen, wie aus dem Stand der Technik bekannt. Wesentlich ist jedoch, dass zumindest sich die an die Granulatherstellung anschließenden thermischen Behandlungsschritte bei hoher Temperatur, nämlich das Reinigen und das Verglasen, jeweils in einem Drehrohrofen erfolgen. Dadurch wird ein weitgehend kontinuierlicher Herstellungsprozess erreicht und ein Wechsel des Ofensystems vermieden. Dies erleichtert die zeitliche Abstimmung und räumliche Anpassung bei aufeinander folgenden Behandlungsschritten und trägt zu einer Verkürzung der Durchlaufzeit des Granulats bei.

Die Drehrohröfen sind auf die spezifischen Anforderungen des jeweiligen Behandlungsschritts angepasst. Dabei kann ein Drehrohrofen in mehrere voneinander abgeschottete Behandlungsräume unterteilt sein. Insbesondere können bei bereits weitgehend trockenem Granulat das Fertigtrocknen und Reinigen in einem Verfahrensschritt in einem Reinigungsofen erfolgen. Im Idealfall ist aber für jeden der Behandlungsschritte Trocknen, Reinigen und Verglasen ein eigener Drehrohrofen vorgesehen. Dadurch können Behandlungsdauer, -temperatur und -atmosphäre jeweils unabhängig voneinander an den jeweiligen Prozess optimiert werden, was zu einem qualitativ besseren Endprodukt führt. Dadurch kann beispielsweise bei den Übergängen vom Trocknen zum Reinigen und vom Reinigen zum Verglasen jeweils die Restwärme vom Vorprozess genutzt werden.

Die Behandlungen erfolgen jeweils in Drehrohröfen mit einem um eine Mittelachse rotierenden, beheizten Drehrohr. Dieses ist in Längsrichtung des Ofens leicht geneigt, um einen Transport des Granulats von seiner Einlaufseite zur Auslaufseite herbeizuführen.

Dabei ergeben sich wegen der hohen Temperatur und der damit verbundenen Materialbelastung besondere Anforderungen beim Verglasen im Drehrohrofen, die im Folgenden näher erläutert werden.

Über die Länge des Drehrohres gesehen wird beim Verglasen ein Temperaturprofil mit einem Temperaturmaximum erzeugt, das höher liegt als die Erweichungstemperatur von Quarzglas, also oberhalb von 1150 °C. Um dies ohne Verformung des Drehrohres zu ermöglichen, besteht die Innenwandung des Drehrohrs oder mindestens der hochbelastete Teil desselben aus einer temperaturfesten Keramik mit höherer Erweichungstemperatur als undotiertes Quarzglas.

Das Drehrohr ist einteilig oder es besteht aus mehreren Teilen, wobei die Drehrohr-Innenwandung mindestens über diejenige Teillänge, die der maximalen Temperaturbelastung ausgesetzt ist, aus der temperaturfesten Keramik besteht. Die Innenwandung ist integraler Bestandteil des Drehrohres oder sie ist beispielsweise als Innenauskleidung des Drehrohres ausgeführt.

Die Granulatteilchen werden in dem Drehrohr auf eine Temperatur erhitzt, die zum Verglasen genügt. Die daraus nach dem Verglasen erhaltenen Quarzglasteilchen haben eine spezifische Oberfläche von weniger als 1 cm²/g (ermittelt nach DIN ISO 9277- Mai 2003; "Bestimmung der spezifischen Oberfläche von Feststoffen durch Gasadsorption nach dem BET-Verfahren"). Die Oberfläche ist dicht, wobei die Teilchen transparent oder teilweise opak sein können.

Damit das Verglasen der Schüttung aus porösem SiO₂-Granulat im Drehrohr überhaupt gelingt, ist weitere Voraussetzung eine Atmosphäre, die Helium und/oder Wasserstoff enthält. Nur eine ausreichend Helium und/oder Wasserstoff enthaltenden Atmosphäre ermöglicht ein blasenfreies oder besonders blasenarmes Einschmelzen der porösen Granulatteilchen bei niedriger Temperatur und/oder kurzen Verglasungdauern, wie sie unter den Bedingungen des Drehrohrofen-Verglasens möglich sind. Gegebenenfalls eingeschlossene Gase bestehen zum großen Teil (beispielsweise mindestens 90 Vol.-%) aus Helium. Anteile von Wasserstoff, das bei der Weiterverarbeitung der verglasten Quarzglaskörnung ebenfalls leicht ausdiffundieren kann, sowie geringe Anteile weiterer Gase sind für viele Anwendungen unschädlich.

Gemäß der Erfindung ist daher vorgesehen, dass das Drehrohr beim Verglasen entweder mit einem Behandlungsgas geflutet ist oder dass es mit diesem Behandlungsgas kontinuierlich oder von Zeit zu Zeit gespült wird, wobei das Behandlungsgas zu mindestens 30 Vol.-% aus Helium und/oder Wasserstoff besteht und gleichzeitig möglichst wenig - im Idealfall keinen - Stickstoff enthält. Denn es hat sich gezeigt, dass in Gegenwart von Stickstoff verglaste Granulatteilchen zu einem höheren Blasengehalt neigen.

Beim Durchwandern des Drehrohres sind die Granulatteilchen mechanischen Kräften ausgesetzt, die durch das Gewicht und die Umwälzung der Schüttung erzeugt werden. Etwaige Agglomerate der verglasten Körnung werden dabei wieder aufgelöst.

Das Verglasen im Drehrohrofen umfasst einen Durchlauf oder mehrere Durchläufe. Im Fall mehrerer Durchläufe kann die Temperatur von Durchlauf zu Durchlauf erhöht werden. Bei mehreren Durchläufen wird eine geringere Blasigkeit der Quarzglaskörnung erzielt.

Die verglaste Quarzglaskörnung kann unmittelbar zur Herstellung von Quarzglasbauteilen eingeschmolzen werden. Es hat sich jedoch gezeigt, dass je nach Einschmelztechnik und bei sehr hohen Anforderungen an die Blasenfreiheit der Quarzglasbauteile die oben erläuterten Verglasungsmaßnahmen im Drehrohrofen nicht ausreichen, auch wenn die resultierende Körnung augenscheinlich vollständig transparent erscheint.

Schließt sich dem Verglasungsprozess jedoch eine thermische Nachbehandlung der verglasten Quarzglaskörnung in einer helium- und wasserstoffarmen Atmosphäre an, kann die Blasigkeit des daraus erschmolzenen Quarzglasbauteils deutlich verringert werden. Diese Nachbehandlung ist umso wirkungsvoller, je geringer die Konzentration an Helium und Wasserstoff in der Atmosphäre und je höher das Produkt aus Behandlungstemperatur und -dauer sind. Ein blasenmindernder Effekt der nachbehandelten Körnung zeigt sich bei Behandlungs-Atmosphären, die weniger als 20% Helium oder Wasserstoff enthalten und bei Behandlungstemperaturen oberhalb von 300 °C, vorzugsweise oberhalb von 800 °C sowie bei Behandlungsdauern von mindestens 10 Minuten, vorzugsweise mindestens 15 min.

Beim Nachbehandeln der verglasten Quarzglaskörnung ist die Atmosphäre idealerweise frei von Helium und Wasserstoff, geringe Anteile dieser Gase von weniger als 20 Vol.-% sind unschädlich. Im einfachsten Fall besteht sie im Wesentlichen aus Stickstoff oder Argon, sie kann aber auch Sauerstoff enthalten.

Durch den Einsatz von Helium und/oder Wasserstoff beim Verglasen gelingt ein vollständiges Verglasen der porösen Granulatteilchen bei vergleichsweise niedriger Temperatur und in kurzer Zeit. Die so verglaste Quarzglaskörnung enthält jedoch herstellungsbedingt Helium beziehungsweise Wasserstoff. Die blasenvermindernde Wirkung der Nachbehandlung wird darauf zurückgeführt, dass trotz der hohen Diffusionsgeschwindigkeiten dieser Gase die durch das Drehrohrofen-Verfahren vorgegebenen Verglasungsbedingungen - insbesondere wegen kurzer Dauer und niedriger Temperatur - nicht ausreichend sind, um auch noch ein hinreichendes Ausdiffundieren dieser Gase aus der hochbeladenen Körnung beim Abkühlen zu ermöglichen. Dies gilt insbesondere für vergleichsweise große Quarzglasteilchen. Entscheidend für den Erfolg der Nachbehandlung sind diejenigen Parameter, die eine Ausdiffusion von Helium und Wasserstoff aus der verglasten Körnung erleichtern, also insbesondere Temperatur, Dauer und Partialdruck dieser Gase in der die Quarzglaskörnung umgebenden Atmosphäre.

Hinsichtlich der Temperatur ist an und für sich die Kerntemperatur der Körnung entscheidend, da es im Wesentlichen auf eine Ausdiffusion der genannten Gase aus dem Teilchenvolumen ankommt. Einfacher überprüfbar und daher reproduzierbarer einstellbar ist jedoch die Oberflächentemperatur der Quarzglaskörnung.

Grundsätzlich sinkt die Kerntemperatur umso weniger ab, je geringer der Temperaturabfall der Oberflächentemperatur beim Übergang der Heißbehandlungsschritte ist.

Bei einer bevorzugten Verfahrensweise ist daher vorgesehen, dass die Oberflächentemperatur der verglasten Quarzglaskörnung zwischen den Verfahrensschritten des Verglasens und Nachbehandelns jeweils nicht unterhalb von 200 °C, vorzugsweise nicht unterhalb von 800 °C abfällt.

Dadurch ergibt sich außerdem eine bessere Ausnutzung der Restwärme von einem Verfahrensschritt zum nächsten. Diese Anforderung an einen möglichst geringen Temperaturabfall zwischen aufeinander folgenden Verfahrensschritten betrifft vorteilhafterweise auch die Oberflächentemperatur des SiO₂-Granulats zwischen den Verfahrensschritten des Reinigens und Verglasens.

Es ist nicht erforderlich, die Helium- und Wasserstoffbeladung der im Drehrohrofen verglasten Quarzglaskörnung vollständig zu beseitigen. Für ein blasenfreies Einschmelzen der Quarzglaskörnung auch unter schwierigen Schmelzbedingungen, das heißt, bei kurzen Aufschmelzdauern und großen Schmelzmassen, hat es sich als ausreichend erwiesen, wenn der Gehalt an Wasserstoff und Helium pro 1 cm³ Quarzglaskörnung so ist, dass er unter Normalbedingungen ein Gasvolumen von weniger als 2 cm³ einnimmt.

Der Verglasungsprozess unter Helium und/oder Wasserstoff bewirkt eine hohe Beladung der Quarzglaskörnung mit diesen Gasen. Beim Ausgasen ergibt sich ein Gasvolumen an Helium und Wasserstoff bis zum 3-fachen des Glasvolumens unter Normalbedingungen (bei Raumtemperatur (25 °C) und Atmosphärendruck). Die Nachbehandlung bewirkt eine Verringerung dieser Gasbeladung um mindestens ein Drittel, so dass das Ausgasen der nachbehandelten Quarzglaskörnung ein Gasvolumen an Helium und Wasserstoff von zusammen weniger als dem 2-fachen des Glasvolumens ergibt.

Das Nachbehandeln der Quarzglaskörnung kann in einem separaten Ofen, beispielsweise einem separaten Drehrohrofen erfolgen. Im Hinblick auf eine möglichst produktive und weitgehend kontinuierliche Verfahrensweise wird jedoch zum Verglasen des SiO₂-Granulats und zum Nachbehandeln der Quarzglaskörnung ein und derselbe Drehrohrofen eingesetzt, der in Richtung der Mittelachse gesehen in Zonen unterteilt ist, umfassend eine Verglasungszone und eine Nachbehandlungszone.

Die einzelnen Zonen des Drehrohrofens unterscheiden sich in ihrer Temperatur, der Atmosphäre und der Länge, die im Wesentlichen die Behandlungsdauer des Granulats und der verglasten Körnung bestimmt.

Die Zonen können sich auch in der chemischen Zusammensetzung des Drehrohres unterscheiden. So ist in der Nachbehandlungszone vorzugsweise ein Drehrohr aus Quarzglas vorgesehen. Im Fall von Drehrohren aus unterschiedlichen Werkstoffen können diese stoßweise aneinander grenzen, vorzugsweise sind sie aber mit gewissem Spiel ineinandergesteckt, um Probleme wegen unterschiedlicher thermischer Ausdehnungskoeffizienten der jeweiligen Werkstoffe zu vermindern.

Um die Atmosphären in den unterschiedlichen Zonen des Drehrohrofens weitgehend unabhängig voneinander einstellen zu können, sind benachbarte Zonen des Drehrohrofens fluidisch voneinander in gewissem Maße separiert und zu diesem Zweck vorzugsweise durch mit Öffnungen versehene Trennscheiben oder durch Labyrinthfallen unterteilt.

Im Sinne einer weitgehend kontinuierlichen Verfahrensweise wird auch zum Trocknen und zum Reinigen des SiO₂-Granulats nur ein Drehrohrofen eingesetzt, wobei dieser in Richtung der Mittelachse gesehen in Zonen unterteilt ist, umfassend eine Trocknungszone und eine Reinigungszone.

Die Unterteilung in Zonen erfolgt vorzugsweise wiederum bevorzugt durch mit Öffnungen versehene Trennscheiben oder durch Labyrinthfallen. Im Bereich der Trocknungs- und Reinigungszone besteht die Innenwandung des Drehrohres vorzugsweise aus Quarzglas, um Verunreinigungen des Granulats zu vermeiden.

Laufen mehrere Prozessschritte in einem gemeinsamen Drehrohrofen ab, wie etwas Trocknen/Reinigen oder Verglasen/Nachbehandeln kann jede der Zonen mit einer eigenen Heizeinrichtung versehen sein. Im Hinblick auf eine gute Energieausnutzung werden die Drehrohre zum Reinigen und Verglasen jeweils mittels einer das Drehrohr umgebenden Widerstandsheizeinrichtung beheizt und das zur Nachbehandlung eingesetzte Drehrohr oder ein zur Nachbehandlung eingesetzter Bereich des Drehrohrs wird nicht unmittelbar beheizt.

Das erfindungsgemäße Verfahren führt zu besonders guten Ergebnissen, wenn die Granulatteilchen eine mittlere Korngröße zwischen 100 und 2000 µm, vorzugsweise zwischen 200 µm und 400 µm, aufweisen.

Granulatteilchen mit einer mittleren Korngröße von mehr als 1000 µm lassen sich nur langsam verglasen. Besonders feinkörnige Quarzglaskörnung neigt zum Verbacken mit der Drehrohrwandung.

Um diesen Effekt zu minimieren hat es sich bewährt, einen Feinanteil des SiO₂-Granulats mit Teilchengrößen von weniger als 100 µm vorab so einzustellen, dass er weniger als 10 Gew.-% des Granulat-Gesamtgewichts ausmacht.

Das Trocknen des Granulats gemäß Verfahrensschritt (b) erfolgt vorzugsweise durch Erwärmen unter Luft bei einer Temperatur im Bereich zwischen 200 und 600 °C.

Bei dieser Verfahrensweise ist für das Trocknen des Granulats ein separater Trocknungsofen vorgesehen, der vorzugsweise als Drehrohrofen ausgebildet ist. Die Temperatur ist konstant oder wird bei Trocknungsfortschritt erhöht. Bei Temperaturen unterhalb von 200 °C ergeben sich lange Trocknungsdauern. Oberhalb von 600 °C kann es zu einem raschen Austritt eingeschlossener Gase kommen, der zur Zerstörung der Granulate führen kann.

Das Reinigen im Drehrohr gemäß Verfahrensschritt (c) erfolgt unter chlorhaltiger Atmosphäre bei einer Temperatur im Bereich zwischen 900 und 1250 °C.

Die chlorhaltige Atmosphäre bewirkt insbesondere eine Reduzierung an Alkali- und Eisenverunreinigungen aus dem SiO₂-Granulat. Bei Temperaturen unterhalb von 900 °C ergeben sich lange Behandlungsdauern und bei Temperaturen oberhalb von 1250 °C besteht die Gefahr des Dichtsinterns des porösen Granulats unter Einschluss von Chlor oder gasförmigen Chlorverbindungen.

Sofern nichts anderes gesagt ist, beziehen sich die folgenden Erläuterungen auf vorteilhafte Ausgestaltungen beim Verglasen des Granulats im Drehrohrofen.

Im Hinblick auf besonders hohe Dichte und geringen Blasengehalt hat sich ein Behandlungsgas beim Verglasen bewährt, das mindestens 50 Vol.-% Helium und/oder Wasserstoff enthält, vorzugsweise mindestens 95 Vol.-%. Der Restanteil kann durch inerte Gase wie Argon oder durch Stickstoff und/oder Sauerstoff gebildet werden, wobei der Volumenanteil der beiden zuletzt genannten Gase vorzugsweise weniger als 30 % beträgt, die Atmosphäre also stickstoff- und sauerstoffarm ist.

Die Granulatteilchen werden im Drehrohr auf eine Temperatur erhitzt, die ein Verglasen bewirkt. Bewährt hat sich eine Temperatur im Bereich von 1300 °C bis 1600 °C.

Bei Temperaturen von weniger als 1300 °C ist zum vollständigen Verglasen eine lange Behandlungsdauer erforderlich. Vorzugsweise beträgt die Temperatur mindestens 1450 °C. Bei Temperaturen oberhalb von 1600 °C werden Drehrohr und Ofen thermisch übermäßig belastet.

Die mechanische Beanspruchung der Granulate durch die Rotation des Drehrohres vermindert die Gefahr von Agglomeratbildungen. Bei hohen Temperaturen oberhalb von etwa 1400 °C kommt es jedoch zum teilweisen Erweichen des Quarzglases, so dass es in Bereichen mit geringer Bewegung zu Anhaftungen an der Drehrohrwandung kommen kann.

Um dies zu verhindern, ist bei einer bevorzugten Verfahrensweise vorgesehen, dass die Granulatteilchen einer Vibration unterzogen werden.

Die Vibration kann durch Rütteln, Stoßen oder Ultraschall erzeugt werden. Sie erfolgt regelmäßig oder impulsartig von Zeit zu Zeit.

Die hohe Verglasungs-Temperatur kann durch Brenner erzeugt werden, die auf die Granulatteilchen einwirken. Bevorzugt ist jedoch eine Verfahrensweise, bei der das Erhitzen mittels einer das Drehrohr umgebenden Widerstandsheizeinrichtung erfolgt.

Der Wärmeeintrag von außen durch das Drehrohr erfordert eine Ausführung aus einer temperaturstabilen Keramik, wie oben erläutert. Durch diese Art der Beheizung wird verhindert, dass die Granulatteilchen mechanisch (durch Verblasen) oder chemisch (durch Verunreinigungen) von einem Brenngas beeinflusst werden.

Als Werkstoff für die Drehrohr-Innenwandung kommt vorteilhafterweise eine Substanz in Betracht, die gleichzeitig die Viskosität von Quarzglas erhöht, vorzugsweise Al₂O₃, ZrO₂, oder Si₃N₄.

Der Werkstoff der Drehrohr-Innenwandung hat in dem Fall die zusätzliche Eigenschaft, dass er einen Dotierstoff enthält, der zu einer Erhöhung der Viskosität von Quarzglas und damit zu einer Verbesserung der thermischen Stabilität von Quarzglasbauteilen beiträgt. Die porösen Granulatteilchen, die den Dotierstoff nicht oder in einer nicht ausreichenden Konzentration enthalten, werden in dem Drehrohr kontinuierlich erhitzt und dabei umgewälzt. Durch den Kontakt mit der den Dotierstoff enthaltenden Innenwandung ergibt sich ein feinteiliger Abrieb, der zu einer gewünschten Dotierung der Granulatteilchen führt oder dazu beiträgt. Der Dotierstoff liegt im Quarzglas in der Regel als Oxid vor. Ein Kerngedanke dieser Ausführungsform des erfindungsgemäßen Verfahrens besteht somit darin, das vollständige Verglasen der porösen SiO₂-Granulatteilchen in einem Drehrohrofen bei hoher Temperatur durchzuführen, was ermöglicht wird durch eine geeignete Atmosphäre beim Verglasen und durch einen temperaturfesten Werkstoff für das Drehrohr, der gleichzeitig durch Abrieb als Dotierstoffquelle für die Quarzglaskörnung dient. Dieses Verfahren ermöglicht ein kontinuierliches Verglasen der SiO₂-Granulatteilchen und dabei gleichzeitig das homogene Beladen mit dem die Viskosität erhöhenden Dotierstoff.

Als geeignete Dotierstoffe in diesem Sinne kommen insbesondere Al₂O₃ und Stickstoff (in Form von Si₃N₄) in Betracht. Für einen ausreichenden Eintrag dieser Dotierstoffe ist es vorteilhaft, wenn die Drehrohr-Innenwandung zumindest im hochbelasteten Bereich zu mindestens 90 Gew.-%, vorzugsweise zu mindestens 99 Gew.-% aus der betreffenden Substanz besteht.

Insbesondere Al₂O₃ zeichnet sich durch eine hohe Temperaturfestigkeit, eine gute Temperaturwechselbeständigkeit sowie Korrosionsfestigkeit aus. Im einfachsten Fall besteht die gesamte Innenwandung des Drehrohres aus Al₂O₃. Andernfalls besteht derjenige Teil des Drehrohres aus Al₂O₃, der der höchsten Temperaturbelastung ausgesetzt ist.

Bei hohen Temperaturen können die Granulatteilchen und die verglasten Quarzglasteilchen durch Abrieb des Materials der Drehrohr-Innenwandung verunreinigt werden. Bereits geringe Alkaligehalte erhöhen die Entglasungsneigung von Quarzglas beträchtlich. Daher weist die Substanz der Drehrohr-Innenwandung vorzugsweise einen Alkaligehalt von weniger als 0,5% auf.

Für eine Dotierung der Quarzglasteilchen mit Al₂O₃ wird dieser Kontamination durch Verunreinigungen entgegengewirkt, wenn die Drehrohr-Innenwandung aus synthetisch hergestelltem Al₂O₃ besteht.

Synthetisch hergestelltes Al₂O₃ mit einer Reinheit von mehr als 99 Gew.-% ist unter dem Handelsnamen "Alsint" bekannt. Um Materialkosten zu minimieren, kann der synthetische Werkstoff auf den Bereich einer dünnen Innenauskleidung des Drehrohres beschränkt sein.

Bei Einsatz eines Al₂O₃-haltigen Drehrohres kann so auf einfache Art und Weise eine Al₂O₃-Dotierung der Quarzglaskörnung im Bereich von 1 bis 20 Gew-ppm erzeugt werden.

Alternativ dazu besteht die Drehrohr-Innenwandung aus ZrO₂ oder TiO₂.

Diese Werkstoffe zeichnen sich durch ausreichend hohe Schmelztemperaturen für das Verglasen des SiO₂-Granulats aus (ZrO₂: ca. 2700 °C; TiO₂: ca. 1855 °C) und sie sind in geringer Konzentration für viele Anwendungen als Verunreinigung unschädlich, wie etwa für die Halbleiterfertigung.

Abgesehen von einer etwaigen metallischen Einfassung besteht das Drehrohr im einfachsten Fall vollständig aus der Keramik.

Für ein möglichst gleichmäßiges Verglasen der Granulatteilchen und eine möglichst homogene Beladung mit Dotierstoff sind etwa gleiche Teilchengrößen vorteilhaft. Im Hinblick hierauf hat es sich bewährt, wenn die Granulatteilchen eine enge Teilchengrößenverteilung aufweisen, bei der der dem D₉₀-Wert zugeordnete Teilchendurchmesser maximal doppelt so groß ist wie der dem D₁₀-Wert zugeordnete Teilchendurchmesser.

Eine enge Teilchengrößenverteilung zeigt eine vergleichsweise geringe Schüttdichte, was einer Agglomeration beim Verlasen entgegenwirkt. Außerdem entfällt bei im Idealfall monomodaler Größenverteilung der Granulatteilchen der Gewichtsunterschied zwischen den Teilchen als Parameter für eine etwaige Separierung innerhalb der Schüttung, was einem gleichmäßigeren Verglasen der Schüttung förderlich ist.

Die verglasten Quarzglasteilchen sind zur Herstellung von Bauteilen aus opakem oder transparentem Quarzglas einsetzbar, wie beispielsweise eines Rohres aus opakem Quarzglas, das in einem Schleuderverfahren hergestellt wird. Sie können auch als teilchenförmiges Ausgangsmaterial zur Herstellung eines Quarzglaszylinders im sogenannten Verneuil-Verfahren eingesetzt werden.

Vorzugsweise werden die Quarzglasteilchen jedoch zur Herstellung eines Quarzglastiegels eingesetzt, insbesondere zur Herstellung der Außenschicht des Tiegels.

Die viskositätserhöhende Wirkung des Dotierstoffs der Quarzglasteilchen trägt zu einer Verlängerung der Standzeit des Quarzglastiegels bei.

### Ausführungsbeispiel

Nachfolgend wird die Erfindung anhand eines Ausführungsbeispiels und einer Zeichnung näher erläutert. Es zeigt in schematischer Darstellung
**Figur 1** einen Drehrohrofen zur Durchführung des Verglasungs- und Nachbehandlungsschritts beim erfindungsgemäßen Verfahren in einer Seitenansicht, und
**Figur 2** ein Temperaturprofil über der Länge des Drehrohrofens.

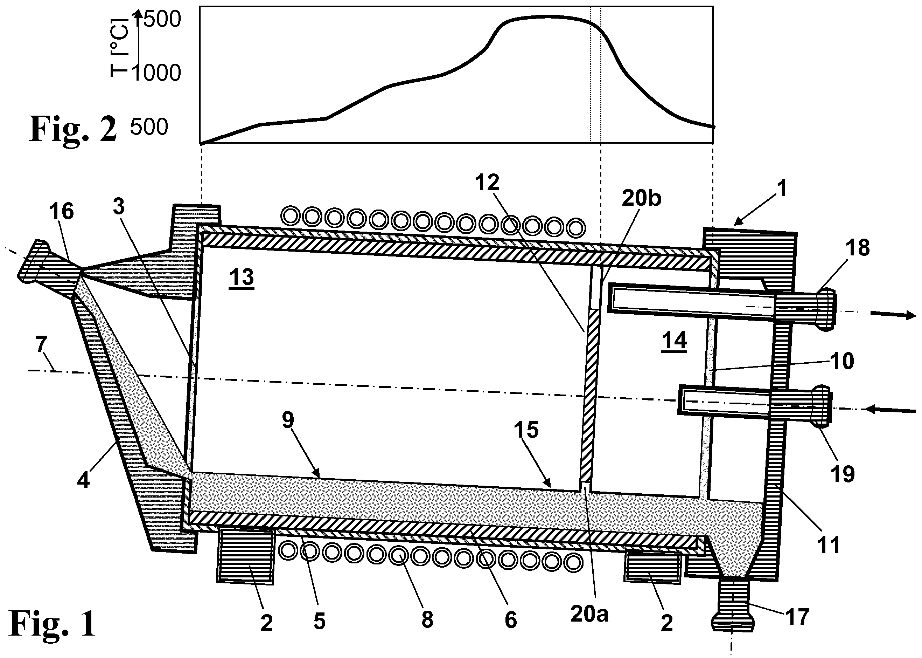

**Figur 1** zeigt einen auf Laufrollen 2 gelagerten Drehrohrofen 1. Der Drehrohrofen 1 weist im Wesentlichen einen Rahmen 5 aus SiC auf, in dem ein Drehrohr 6 aus synthetisch hergestelltem Al₂O₃ (Handelsname Alsint) mit einem Innendurchmesser von 150 mm und einer Länge von 1,8 m fixiert ist. Das Drehrohr 6 ist um eine Mittelachse 7 rotierbar und mittels einer am Außenmantel vorgesehenen Widerstandsheizeinrichtung 8 beheizbar.

Der Drehrohrofen 1 ist in Längsrichtung 7 gegenüber der Horizontalen leicht geneigt, um den Transport einer Schüttung aus porösem SiO₂-Granulat 9 von der Einlaufseite 3 des Drehrohrofens 1 zur Entnahmeseite 10 herbeizuführen. Die offene Einlaufseite 3 ist mittels eines rotatorisch feststehenden Einlaufgehäuses 4 verschlossen. Das Einlaufgehäuse 4 ist mit einem Einlass 16 für die Zufuhr von porösem SiO₂ Granulat 9 und mit einem weiteren Einlass (nicht dargestellt) für die Zufuhr von Helium und anderen Behandlungsgasen ausgestattet.

Die offene Entnahmeseite 10 des Drehrohres 6 ist mittels eines ebenfalls rotatorisch feststehenden Entnahmegehäuses 11 verschlossen. Das Entnahmegehäuse 11 ist mit einem Auslass 17 für die Entnahme von verglaster und nachbehandelter Quarzglaskörnung 15 versehen, über den auch Gas aus dem Drehrohrofen 1 ausströmen kann. Zur Absaugung von heliumreichem Gas ist ein Absaugstutzen 18 vorgesehen, der im oberen Bereich des Drehrohrofens 1 angeordnet ist. Weiterhin ist das Entnahmegehäuse 11 mit einem Gaseinlassstutzen 19 ausgestattet, mittels dem ein heliumfreies Gas, insbesondere Argon, in das Drehrohr 6 eingeleitet wird.

Mittels einer Trennscheibe 12 ist der Innenraum unterteilt in eine Vorheiz- und Verglasungszone 13 und in eine Nachbehandlungszone 14. Die Trennscheibe 12 ist so gestaltet, dass sie für die Schüttung der Granulatteilchen 9 beziehungsweise der verglasten Quarzglaskörnung 15 durchlässig ist, jedoch die Gasräume ansonsten weitgehend trennt. Zu diesem Zweck ist sie an der Innenwandung des Drehrohres 6 fixiert und hat ihrem Außenrand zwei sich radial gegenüberliegende, gleich große Öffnungen 20a, 20b. Gelangt die eine Öffnung 20a infolge der Rotation des Drehrohres 6 in den Bereich der Schüttung des Granulats 9 beziehungsweise der Quarzglaskörnung 15, so lässt sie diese passieren und wird gleichzeitig von der Schüttung weitgehend verstopft, so dass dort nur wenig Gas aus der Verglasungszone 13 in die Nachbehandlungszone 14 entweichen kann. Zum gleichen Zeitpunkt befindet sich die gegenüberliegende Öffnung 20b in ihrer obersten Position im Drehrohrofen 1. Dort tritt das relativ leichte Heliumgas bevorzugt aus und wird mittels des unmittelbar dort positionierten Ansaugstutzens 18 abgesaugt und gleichzeitig über den Gaseinlass 19 durch Argon ersetzt.

Auf diese Art und Weise gelingt eine weitgehende Trennung der Gasräume von Vorheiz-/Verglasungszone 13 und Nachbehandlungszone 14. Für eine noch effektivere Trennung können mehrere hintereinander angeordnete Trennscheiben 12 mit labyrinthartig versetzt zueinander angeordneten Öffnungen dienen, oder es werden getrennte Drehrohröfen für die Verglasung des Granulats 9 und für dessen Nachbehandlung eingesetzt. Im letztgenannten Fall wird die noch mindestens 200 °C heiße verglaste Quarzglaskörnung unmittelbar in den Drehrohrofen für die Nachbehandlung übergeben.

Die Widerstandsheizeinrichtung 8 erstreckt sich nicht auf den Bereich der Nachbehandlungszone 14; diese ist - abgesehen vom Wärmeeintrag durch Konvektion und Wärmeleitung aus der benachbarten Verglasungszone 13 - unbeheizt.

Im Folgenden wird das erfindungsgemäße Verfahren anhand von Ausführungsbeispielen näher beschrieben:

### Herstellung, Trocknung und Reinigung von SiO₂-Granulat

### Beispiel A

Das Granulat wurde durch Granulation eines Schlickers mit 60 Gew.-% Restfeuchte aus pyrogener Kieselsäure (nanoskaliges SiO₂-Pulver, SiO₂-Sootstaub) und VE-Wasser im Intensivmischer hergestellt. Nach der Granulation beträgt die Restfeuchte <20%. Das Granulat wurde auf Korngrößen < 3mm abgesiebt.

Durch Trocknung bei 400°C in einem Drehrohrofen (Durchsatz: 20 kg/h) unter Luft wurde die Restfeuchte auf <1% abgesenkt. Anschließend wurde der Feinanteil mit Korngrößen <100 µm entfernt. Es erfolgt eine Absiebung auf die Fraktion 100 bis 750 µm, das heißt, der Feinanteil mit Korngrößen <100 µm wurde entfernt. Die Korngrößenverteilung ist durch einen D10-Wert um 200 µm und einen D90-Wert um 400 µm gekennzeichnet.

Anschließend erfolgt eine Reinigung und weitere Trocknung in HCl-haltiger Atmosphäre im Drehrohrofen bei einer Maximaltemperatur von 1040 °C (Durchsatz: 10 kg/h). Dabei wird die spezifische Oberfläche (BET) um ca. 50% verringert.

Es wurde ein SiO₂-Granulat aus synthetischem, undotiertem Quarzglas mit hoher Reinheit erhalten. Es besteht im Wesentlichen aus porösen, sphärischen Teilchen mit einer Teilchengrößenverteilung mit einem D10-Wert von 200 µm, einem D90-Wert von 400 µm und einem mittleren Teilchen-Durchmesser (D50-Wert) von 300 µm.

### Beispiel B

Das Granulat wurde durch Schnellgranulation aus pyrogener Kieselsäure (nanoskaliges SiO₂-Pulver, SiO₂-Sootstaub) und VE-Wasser im Intensivmischer hergestellt. Dazu wird VE-Wasser im Intensivmischer vorgelegt und unter Mischung pyrogene Kieselsäure zugegeben, bis die Restfeuchte ca. 23 Gew.-% beträgt und ein Granulat hergestellt ist. Das Granulat wird auf Korngrößen ≤ 2mm abgesiebt.

Durch Trocknung bei 350 °C in einem Drehrohrofen (Durchsatz 15 kg/h) unter Luft wird die Restfeuchte auf < 1% abgesenkt. Der Feinanteil mit Korngrößen < 100 µm wurde entfernt; ansonsten erfolgte keine weitere Absiebung.

Anschließend erfolgt eine Reinigung und weitere Trocknung in HCl-haltiger Atmosphäre im Drehrohrofen bei Temperaturen von 1050 - 1150 °C (Durchsatz: 10 kg/h).

Die Summe chemischer Verunreinigungen wird bei der Heißchlorierung auf kleiner 1/10 des Ausgangsmaterials verringert (d.h. auf < 10 ppm). Das Granulat besteht im Wesentlichen aus porösen Teilchen mit einer Teilchengrößenverteilung mit einem D10-Wert von 300 µm, einem D90-Wert von 450 µm und einem mittleren Teilchen-Durchmesser (D50-Wert) von 350 µm.

### Verglasen des Granulats

Dem um seine Rotationsachse 7 mit einer Umdrehungsgeschwindigkeit von 8 U/min rotierenden Drehrohr 6 wird mit einer Zufuhrrate von 15 kg/h kontinuierlich undotiertes, poröses SiO₂-Granulat 9 zugeführt.

Das Drehrohr 6 ist in Längsrichtung 7 im spezifischen Schüttwinkel der Granulatteilchen 9 geneigt, so dass sich über seine Länge eine gleichmäßige Dicke der Granulat-Schüttung einstellt. Die gleichmäßige Schüttungsdicke erleichtert die weitgehende Abtrennung des Drehrohr-Innenraums in Vorheiz- und Verglasungszone 13 beziehungsweise in die Nachbehandlungszone 14. Die in Figur 1 im Einlassgehäuse 4 dargestellte Schüttung zeigt einen abweichenden Schüttwinkel; dies dient nur der vereinfachten schematischen Darstellung

Der Zone 13 des Drehrohres 6 wird mit Helium geflutet. Die Granulat-Schüttung wird kontinuierlich umgewälzt und dabei mittels der Widerstandsheizeinrichtung 8 innerhalb des Drehrohres 6 erhitzt und allmählich zu Quarzglasteilchen 15 verglast. Die Maximaltemperatur kurz vor etwa dem hinteren Drittel des Drehrohres 6 beträgt etwa 1460 °C. Das Drehrohr 6 aus Al₂O₃ hält dieser Temperatur ohne weiteres stand.

Über die Öffnungen 20a; 20b der Trennscheibe 12 gelangt die Schüttung der verglasten Quarzglasteilchen 15 allmählich in die Nachbehandlungszone 14. Durch das kontinuierliche Einleiten von Argon über den Gaseinlass 19 und infolge des etwa gleich großen Gasverlustes an heliumreicher Verglasungs-Atmosphäre zum einen durch das Absaugen des durch die Öffnungen (20a; 20b) der Trennscheibe 12 austretenden heliumreichen Gases mittels Absaugstutzen 18 und zum anderen durch den Gasverlust über den Entnahmestutzen 17 stellt sich in der Nachbehandlungszone 14 eine Atmosphäre aus einem Gemisch aus Helium mit deutlichem Überschuss an Argon ein; der Heliumgehalt beträgt weniger als 20 Vol.-%. Da die Nachbehandlungszone 14 nicht unmittelbar beheizt ist, nimmt die Temperatur von der Trennscheibe 12 bis zum Auslassgehäuse 11 kontinuierlich ab. Dort liegt die mittlere Oberflächentemperatur der verglasten Körnung 15 bei etwas mehr als 500 °C. Die mittlere Verweildauer der verglasten Körnung 15 in der Nachbehandlungszone 14 beträgt etwa 40 Minuten.

Ein bislang als ideal gefundenes axiales Temperaturprofil über die Länge des Drehrohres 6 ist im Diagramm von **Figur 2** schematisch dargestellt. Auf der y-Achse ist die Temperatur T der Oberfläche der Granulat-Schüttung 9 (ermittelt mittels Pyrometer) gegen die axiale Position im Drehrohr 6 aufgetragen. Unmittelbar nach dem Zuführen des Granulats wird dieses bei einer Temperatur um 500 °C während einer Dauer von 30 min getrocknet, und danach bei allmählich steigender Temperatur bei etwa 1000 °C bis 1300 °C thermisch vorverdichtet. Dabei findet gleichzeitig ein Austausch des in dem porösen Granulat vorhandenen Gases durch Helium statt. Dieser Verdichtungs- und Gasaustauschvorgang dauert etwa 60 min. Anschließend wird die Granulat-Schüttung 9 zum vollständigen Verglasen aufgeheizt und erreicht dabei eine Maximaltemperatur um 1460 °C. Bis dahin beträgt die mittlere Verweilzeit im Drehrohrofen 6 etwa 3h.

In diesem Prozessstadium ist der Heliumgehalt der verglasten Quarzglasteilchen 15 relativ hoch. Das Gasvolumen des theoretisch freisetzbaren Heliumgases liegt beim 3-fachen des Volumens der Teilchen selbst (bei einem Gasvolumen normiert auf 25 °C und Atmosphärendruck).

Nach dem Passieren der Trennscheibe 12 kühlen die verglasten und mit Helium hochbeladenen Quarzglasteilchen 15 in der Nachbehandlungszone allmählich ab und werden dabei infolge der heliumärmeren Atmosphäre gleichzeitig weitgehend entgast, das heißt, Helium erhält Gelegenheit zum Ausdiffundieren aus der dichten Quarzglaskörnung, indem die Temperatur ausreichend hoch - im Beispiel über 500 °C - und die Ausgasungsdauer ausreichen lang - im Beispiel über 30 Minuten - gehalten wird. Nach Abschluss der Nachbehandlung liegt das Gasvolumen an freizusetzendem Helium jedenfalls bei nur noch weniger als dem 2-fachen des Volumens der Teilchen selbst (normiert auf 25 °C und Atmosphärendruck).

Die oben genannten Prozessparameter führen in Verbindung mit der Aufenthaltsdauer des Granulats 9 im Drehrohrofen 1 und der Heliumatmosphäre in der Verglasungszone 13 dazu, dass die offene Porosität weitgehend verschwindet. Die Oberfläche ist dicht. Die Quarzglasteilchen 15 sind bei Entnahme in diesem Verfahrensstadium augenscheinlich vollkommen transparent.

Kommt es zu Agglomeraten, werden diese infolge der mechanischen Beanspruchung in der sich bewegenden Granulat-Schüttung 9 oder durch Vibration des Drehrohres 6 wieder aufgelöst.

Gleichzeitig kommt es zu einem gleichmäßigen Abrieb von Al₂O₃, das auf die Oberfläche der Granulatteilchen 9 und in deren Poren gelangt. Die so erzeugte, verglaste Quarzglaskörnung weist homogene Dotierung mit Al₂O₃ um 15 Gew.-ppm auf. Wegen der schlechten Benetzbarkeit von Al₂O₃ mit Quarzglas werden Anhaftungen an der Innenwandung des Drehrohres 6 weitgehend vermieden.

Die vollständig verglaste und homogen dotierte Quarzglaskörnung hat eine Dichte von mehr als 2,0 g/cm³ und eine BET-Oberfläche von weniger als 1 m²/g und sie weist einen - in Anbetracht der Verglasung unter Helium - vergleichsweise geringen Heliumgehalt auf. Sie wird über das Austragsgehäuse 11 und den Auslassstutzen 17 kontinuierlich entnommen.

Die Quarzglaskörnung wird zur Herstellung der Außenschicht eines Quarzglastiegels eingesetzt, wobei die viskositätserhöhende Wirkung der Al₂O₃ Dotierung zu einer Erhöhung der Standzeit des Quarzglastiegels beiträgt.

Im Folgenden werden weitere Vergleichsbeispiele und Ausführungsbeispiele für das Verglasen von porösem SiO₂-Granulat im Drehrohrofen unter He-Atmosphäre erläutert. Diese Beispiele sind teilweise Vorversuche und folgen nicht unbedingt den oben erläuterten, letztendlich als optimal gefundenen Prozessbedingungen, geben aber Aufschluss über die Ausführung und Wirkung der erfindungsgemäßen Lehre:

### Beispiel 1 - unter Einsatz des Granulats von Beispiel A

### Probe A

In einem Vorversuch wurde das Granulat an Umgebungsatmosphäre (Luft) bei einer Maximaltemperatur von 1350 °C gesintert. Das Material haftet bei Temperaturen >1350 °C am Drehrohr an. Das Granulat zeigt Sintererscheinungen, viele Partikel sind jedoch nicht vollständig gesintert.

### Probe B

Bei einer ersten Abwandlung dieser Verfahrensweise wurde das Granulat unter einer He-Atmosphäre im Spülbetrieb bei einem Durchfluss von 1,1 m³/h und einer Maximaltemperatur von 1350 °C im Drehrohrofen 1 gesintert.

Die so erzeugte Quarzglaskörnung ist homogen angesintert, nur wenige Partikel sind nicht gesintert. Sie ließ sich in der Lichtbogenschmelze im Rahmen der Fertigung von Quarzglastiegeln transparent und recht blasenarm verglasen.

### Probe C

Bei einer weiteren Abwandlung dieser Verfahrensweise wurde das Granulat ebenfalls unter He-Atmosphäre im Spülbetrieb bei einem Durchfluss von 2,1 m³/h und einer Maximaltemperatur von 1400 °C im Drehrohrofen 1 gesintert. Das Material haftet dabei leicht am Drehrohr 6 an. Durch mechanische Vibrationen (Klopfen und Rütteln) des Drehrohres 6 konnten die Anhaftungen vermieden werden. Dadurch ergab sich jedoch auch ein höherer Durchsatz (von 2 kg/h auf 4 kg/h), der den Grad des Sinterns verschlechterte. Durch Verringerung der Neigung des Drehrohres 6 konnte der Durchsatz wieder verringert werden.

Die danach erzeugte Quarzglaskörnung 15 ist homogen gesintert (nur wenige Partikel sind wenig oder nicht gesintert). Sie ließ sich in der Lichtbogenschmelze im Rahmen der Fertigung von Quarzglastiegeln transparent und recht blasenarm verglasen.

### Beispiel 2 - unter Einsatz des Granulats von Beispiel B

### Probe D

Das Granulat wird an He-Atmosphäre im Spülbetrieb bei einem Durchfluss von 3,5 m³/h bei einer Maximaltemperatur von 1400 °C gesintert. Das Granulat zeigt Sintererscheinungen, große Partikel sind jedoch nicht durchgesintert. Offensichtlich ist bei den gegebenen Partikelgrößen und Temperaturen der Durchsatz mit 4 kg/h zu hoch. Das Material lässt sich in der Lichtbogenschmelze nicht blasenfrei verglasen, es sind feinblasige opake Bereiche zu erkennen.

### Probe E

Bei einer Abwandlung des Verfahrens wurde der Durchsatz durch Verringerung der Drehzahl und Neigung auf 2,4 kg/h verringert und das Granulat unter He-Atmosphäre im Spülbetrieb bei einem Durchfluss von 3,5 m³/h bei 1400 °C gesintert. Die so erzeugte Quarzglaskörnung ist noch nicht homogen gesintert. Erst bei einer Erhöhung der Maximaltemperatur auf 1430 °C (bei sonst gleichen Parametern) wurde eine nahezu transparente Quarzglaskörnung erhalten. Bei noch höheren Temperaturen neigt das Granulat mehr und mehr zum Anhaften am Drehrohr 6.

Die so erzeugte Quarzglaskörnung ließ sich in der Lichtbogenschmelze im Rahmen der Fertigung von Quarzglastiegeln zu transparenten und blasenarmen Schichten verglasen.

### Probe F

Bei einer weiteren Abwandlung des Verfahrens wurde das Granulat zweimal hintereinander unter He-Atmosphäre bei einem Durchfluss von 3,5 m³/h gesintert. Der erste Durchlauf erfolgte bei 1400 °C und der zweite Durchlauf bei 1450°C. Dabei wurden kaum Anhaftungen beobachtet.

Die so erhaltene Quarzglaskörnung ist vollständig und transparent verglast. Nur bei großen Partikeln sind blasenförmige Gaseinschlüsse zu erkennen. Sie lässt sich im Rahmen der Fertigung von Quarzglastiegeln zu transparenten und blasenarmen Schichten verglasen.

Die oben genannten Proben B bis F wurden in einem Drehrohr erschmolzen, bei dem eine Nachbehandlungszone noch nicht eingerichtet war. Auch ansonsten war eine Nachbehandlung der Quarzglaskörnung 15 im Sinne dieser Erfindung nicht vorgesehen. Beim Einsatz der so erhaltenen Quarzglaskörnung zum Erschmelzen von Quarzglas zeigte sich aber ein Verbesserungsbedarf, insbesondere bei sehr hohen Anforderungen an die Blasenfreiheit des Quarzglases.

Daher wurde im Drehrohrofen 1 die Nachbehandlungszone 14 eingerichtet, die eine verlängerte Abkühlphase und zwar in heliumarmer Atmosphäre ermöglicht. Unter diesen Randbedingungen wurden einige der oben beschriebenen, im Großen und Ganzen gelungenen Versuche wiederholt, nun aber zusätzlich mit der oben beschriebenen Nachbehandlung der verglasten Quarzglasteilchen in der Nachbehandlungszone 14.

### Probe B'- mit Nachbehandlung der verglasten Quarzglaskörnung

Das Granulat wurde unter einer He-Atmosphäre im Spülbetrieb bei einem Durchfluss von 1,1 m³/h und einer Maximaltemperatur von 1350 °C gesintert:
Die anschließende Nachbehandlung in heliumarmer Atmosphäre ergab nur eine geringfügige Verbesserung gegenüber Probe B bei einem Einsatz in der Lichtbogenschmelze im Rahmen der Fertigung von Quarzglastiegeln.

### Probe C'- mit Nachbehandlung der verglasten Quarzglaskörnung

Das Granulat wurde unter He-Atmosphäre im Spülbetrieb und bei einer Maximaltemperatur von 1400 °C gesintert und im selben Drehrohrofen 1 wie oben erläutert über die Öffnungen der Trennscheibe 12 der Nachbehandlungszone 14 zugeführt und darin in heliumarmer Atmosphäre nachbehandelt und weitgehend entgast, wie oben erläutert.

Die so erzeugte Quarzglaskörnung ist homogen gesintert (nur wenige Partikel sind wenig oder nicht gesintert). Der Einsatz der Quarzglaskörnung von Probe C' in der Lichtbogenschmelze im Rahmen der Fertigung von Quarzglastiegeln ergab eine merkliche Verbesserung in Bezug auf Blasenfreiheit gegenüber der nicht nachbehandelten Probe C.

### Probe E'- mit Nachbehandlung der verglasten Quarzglaskörnung

Bei einem Durchsatz von 2,4 kg/h wurde das Granulat unter He-Atmosphäre im Spülbetrieb bei einem Durchfluss von 3,5 m³/h bei 1430 °C gesintert und anschließend in heliumarmer Atmosphäre in der Nachbehandlungszone 14 nachbehandelt.

Die so erzeugte Quarzglaskörnung ließ sich in der Lichtbogenschmelze im Rahmen der Fertigung von Quarzglastiegeln zu transparenten und blasenarmen Schichten verglasen. Auch hier ergaben sich merkliche Verbesserungen in Bezug auf Blasenfreiheit im Vergleich zu der nicht nachbehandelten Probe E.

### Probe F' - mit Nachbehandlung der verglasten Quarzglaskörnung

Das zweimal hintereinander unter He-Atmosphäre bei einem Durchfluss von 3,5 m³/h gesinterte Granulat zeigte die anfänglich beste Transparenz und Blasenfreiheit aller Proben A bis F. Die so erhaltene Quarzglaskörnung ist vollständig und transparent verglast. Nur bei großen Partikeln sind blasenförmige Gaseinschlüsse zu erkennen.

Offenbar war diese Quarzglaskörnung 15 jedoch besonders hoch mit Helium beladen. Denn die Nachbehandlung in der heliumarmen Atmosphäre der Nachbehandlungszone 14 ergab gerade bei dieser Körnung eine deutliche Verbesserung in Bezug auf Blasenfreiheit beim Einschmelzen im Rahmen der Fertigung von Quarzglastiegeln.

## Patentansprüche

1. Verfahren zur Herstellung synthetischer Quarzglaskörnung durch Verglasen eines rieselfähigen SiO₂-Granulats, umfassend folgende Verfahrensschritte:
(a) Granulation pyrogen hergestellter Kieselsäure unter Bildung des SiO₂-Granulats aus porösen Granulatteilchen (9),
(b) Trocknen des SiO₂-Granulats,
(c) Reinigen des SiO₂-Granulats durch Erhitzen in einer halogenhaltigen Atmosphäre,
(d) Verglasen des gereinigten SiO₂-Granulats unter einem Behandlungsgas, das mindestens 30 Vol.-% Helium und/oder Wasserstoff enthält unter Bildung verglaster Quarzglaskörnung, und
(e) Nachbehandeln der nach dem Verglasen gemäß Verfahrensschritt (d) erhaltenen verglasten Quarzglaskörnung (15) unter einer Atmosphäre, die weniger als 20% Helium oder Wasserstoff enthält bei einer Behandlungstemperatur von 300 °C oder mehr, und während einer Behandlungsdauer von mindestens 10 Minuten, wobei das Reinigen und Verglasen des SiO₂-Granulats sowie die Nachbehandlung der verglasten Quarzglaskörnung jeweils in einem um eine Mittelachse (7) rotierenden Drehrohr (6) eines Drehrohrofens (1) erfolgen, und wobei das Drehrohr (6) beim Verglasen gemäß Verfahrensschritt (d) eine Innenwandung aus einem keramischen Werkstoff aufweist.

2. Verfahren nach Anspruch 1, **dadurch gekennzeichnet, dass** die Oberflächentemperatur der verglasten Quarzglaskörnung (15) zwischen den Verfahrensschritten des Verglasens und Nachbehandelns nicht unterhalb von 200 °C, vorzugsweise nicht unterhalb von 800 °C abfällt.

3. Verfahren nach Anspruch 1 oder 2, **dadurch gekennzeichnet, dass** die verglaste Quarzglaskörnung (15) einer Nachbehandlung bei einer Behandlungstemperatur von 800 °C oder mehr, vorzugsweise während einer Behandlungsdauer von 15 min oder mehr unterzogen wird.

4. Verfahren nach einem der vorhergehenden Ansprüche, **dadurch gekennzeichnet, dass** der Gehalt an Wasserstoff und Helium pro 1 cm³ Quarzglaskörnung (15) nach Abschluss der Nachbehandlung so ist, dass er unter Normalbedingungen einen Gasvolumen von weniger als 2 cm³ einnimmt.

5. Verfahren nach einem der vorhergehenden Ansprüche, **dadurch gekennzeichnet, dass** zum Verglasen des SiO₂-Granulats (9) und zum Nachbehandeln der Quarzglaskörnung (15) ein und derselbe Drehrohrofen (1) eingesetzt wird, der in Richtung der Mittelachse (7) gesehen in Zonen unterteilt ist, umfassend eine Verglasungszone (13) und eine Nachbehandlungszone (14), wobei bevorzugt derselbe Drehrohrofen (1) zum Trocknen und zum Reinigen des SiO₂-Granulats eingesetzt wird, und in Richtung der Mittelachse (7) gesehen in Zonen unterteilt ist, umfassend eine Trocknungszone und eine Reinigungszone.

6. Verfahren nach Anspruch 5 **dadurch gekennzeichnet, dass** benachbarte Zonen (13; 14) des Drehrohrofens (1) durch mit Öffnungen (20a; 20b) versehene Trennscheiben (12) oder durch Labyrinthfallen unterteilt sind, wobei bevorzugt zum Reinigen ein beheiztes Drehrohr aus Quarzglas, zum Verglasen das beheizte Drehrohr aus Keramik und zur Nachbehandlung ein Drehrohr aus Quarzglas vorgesehen sind.

7. Verfahren nach Anspruch 6, **dadurch gekennzeichnet, dass** die Drehrohre zum Reinigen und Verglasen jeweils mittels einer das Drehrohr (6) umgebenden Widerstandsheizeinrichtung (8) beheizt werden und dass das zur Nachbehandlung eingesetzte Drehrohr oder ein zur Nachbehandlung eingesetzter Bereich des Drehrohrs (6) nicht unmittelbar beheizt wird.

8. Verfahren nach einem der vorhergehenden Ansprüche, **dadurch gekennzeichnet, dass** ein Feinanteil des SiO₂-Granulats mit Teilchengrößen von weniger als 100 µm vorab so eingestellt wird, dass er weniger als 10 Gew.% des Granulat-Gesamtgewichts ausmacht.

9. Verfahren nach einem der vorhergehenden Ansprüche, **dadurch gekennzeichnet, dass** das Reinigen im Drehrohr gemäß Verfahrensschritt (c) unter chlorhaltiger Atmosphäre bei einer Temperatur im Bereich zwischen 900 und 1250 °C erfolgt

10. Verfahren nach einem der vorhergehenden Ansprüche , **dadurch gekennzeichnet, dass** das Behandlungsgas beim Verglasen gemäß Verfahrensschritt (d) mindestens 50 % Helium und/oder Wasserstoff enthält, vorzugsweise mindestens 95 %, wobei die Granulatteilchen (9) bevorzugt auf eine Temperatur im Bereich von 1300 °C bis 1600 °C erhitzt werden.

11. Verfahren nach Anspruch 10, **dadurch gekennzeichnet, dass** die Granulatteilchen (9) oder die verglaste Quarzglaskörnung (15) einer Vibration unterzogen werden.

12. Verfahren nach einem der vorhergehenden Ansprüche, **dadurch gekennzeichnet, dass** beim Verglasen ein Drehrohr (1) mit einer Innenwandung aus Al₂O₃ ZrO₂ oder Si₃N₄ eingesetzt wird, wobei die Substanz der Drehrohr-Innenwandung vorzugsweise einen Alkaligehalt von weniger als 0,5% aufweist.

13. Verfahren nach Anspruch 12 **dadurch gekennzeichnet, dass** die Drehrohr-Innenwandung aus synthetisch hergestelltem Al₂O₃ besteht.

14. Verfahren nach einem der Ansprüche 12 oder 13, **dadurch gekennzeichnet, dass** unter Einsatz eines Al₂O₃-haltigen Drehrohres (1) eine Al₂O₃-Dotierung der verglasten Quarzglaskörnung im Bereich von 1 bis 20 Gew.-ppm erzeugt wird.

15. Verfahren nach einem der vorhergehenden Ansprüche, **dadurch gekennzeichnet, dass** die Granulatteilchen (9) eine mittlere Korngröße zwischen 20 und 2000 µm, vorzugsweise zwischen 100 µm und 400 µm, jeweils D₅₀-Wert, und besonders bevorzugt eine enge Teilchengrößenverteilung aufweisen, wobei der dem D₉₀-Wert zugeordnete Teilchendurchmesser maximal doppelt so groß ist wie der dem D₁₀-Wert zugeordnete Teilchendurchmesser.

## Claims

1. A method for producing synthetic quartz glass granules by vitrifying a free-flowing SiO₂ granulate, the method comprising the steps of:
(a) granulating pyrogenically produced silicic acid so as to form the SiO₂ granulate of porous granulate particles (9),
(b) drying the SiO₂ granulate,
(c) cleaning the SiO₂ granulate by heating in a halogen-containing atmosphere,
(d) vitrifying the cleaned SiO₂ granulate in a treatment gas containing at least 30% by vol. of helium and/or hydrogen so as to form vitrified quartz glass grains, and
(e) subjecting the vitrified quartz glass grains (15) obtained after vitrifying according to method step (d) to a post-treatment in an atmosphere containing less than 20% of helium or hydrogen at a treatment temperature of 300°C or more, and for a treatment period of at least 10 minutes, wherein cleaning and vitrifying of the SiO₂ granulate as well as the post-treatment of the vitrified quartz glass grains are each carried out in a rotating tube (6) of a rotary kiln (1) which is rotating about a central axis (7), and wherein the rotating tube (6) during vitrifying according to method step (d) has an inner wall consisting of a ceramic material.

2. The method according to claim 1, **characterized in that** the surface temperature of the vitrified quartz glass grains (15) between the method steps of vitrifying and post-treatment does not fall below 200°C, preferably not below 800°C.

3. The method according to claim 1 or 2, **characterized in that** the vitrified quartz glass grains (15) are subjected to a post-treatment at a treatment temperature of 800°C or more, preferably for a treatment period of 15 minutes or more.

4. The method according to any one of the preceding claims, **characterized in that** the content of hydrogen and helium per 1 cm³ quartz glass grains (15) after completion of the post-treatment is such that it occupies a gas volume of less than 2 cm³ under normal conditions.

5. The method according to any one of the preceding claims, **characterized in that** for vitrifying of the SiO₂ granulate (9) and for the post-treatment of the quartz glass granules (15) one and the same rotary kiln (1) is used, which when viewed in the direction of the central axis (7) is subdivided into zones, comprising a vitrification zone (13) and a post-treatment zone (14), wherein preferably for drying and cleaning the SiO₂ granulate one and the same rotary kiln (1) is used, which when viewed in the direction of the central axis (7) is subdivided into zones, comprising a drying zone and a cleaning zone.

6. The method according to claim 5, **characterized in that** adjacent zones (13; 14) of the rotary kiln (1) are subdivided by separating screens (12) provided with openings (20a; 20b) or by labyrinth traps, wherein preferably for cleaning a heated rotating tube of quartz glass, for vitrifying a heated rotating tube of ceramic material, and for the post-treatment a rotating tube of quartz glass is provided.

7. The method according to claim6, **characterized in that** the rotating tubes for cleaning and vitrifying are each heated by means of a resistance heater (8) surrounding the rotating tube (6), and that the rotating tube used for the post-treatment or a portion of the rotating tube (6) used for the post-treatment is not directly heated.

8. The method according to any one of the preceding claims, **characterized in that** the SiO₂ granulate has a fines content with particles sizes of less than 100 µm that is pre-selected so as to constitute less than 10% by wt. of the total weight of the granulate.

9. The method according to any one of the preceding claims, **characterized in that** cleaning in the rotary kiln according to method step (c) is carried out in a chlorine-containing atmosphere at a temperature in the range between 900°C and 1250°C.

10. The method according to any one of the preceding claims, **characterized in that** the treatment gas during vitrifying according to method step (d) contains at least 50% helium and/or hydrogen, preferably at least 95%, wherein the granulate particles (9) are preferably heated to a temperature in the range of 1300°C to 1600°C.

11. The method according to claim 10, **characterized in that** the granulate particles (9) or the vitrified quartz glass grains (15) are subjected to vibration.

12. The method according to any one of the preceding claims, **characterized in that** during vitrifying a rotating tube (1) is used with an inner wall consisting of Al₂O₃, ZrO₂ or Si₃N₄, wherein the substance of the inner wall of the rotating tube preferably has an alkali content of less than 0.5%

13. The method according to claim 12, **characterized in that** the inner wall of the rotating tube consists of synthetically produced Al₂O₃.

14. The method according to claim 12 or 13, **characterized in that** an Al₂O₃ doping of the vitrified quartz glass grains in the range of 1 to 20 wt. ppm is effected by using an Al₂O₃-containing rotating tube (1).

15. The method according to any one of the preceding claims, **characterized in that** the granulate particles (9) have a mean grain size between 20 µm and 2000 µm, preferably between 100 µm and 400 µm, each D₅₀ value, and particularly preferable have a narrow particle size distribution, in which the particle diameter assigned to the D₉₀ value is not more than twice as great as the particle diameter assigned to the D₁₀ value.

## Revendications

1. Procédé de fabrication d'un grain de verre de quartz synthétique par vitrification d'un granulé de SiO₂ pouvant éculer, comprenant les étapes de procédé suivantes :
(a) granulation de l'acide silicique préparé par pyrogénation avec formation du granulé de SiO₂ à partir de particules de granulé poreuses (9),
(b) séchage du granulé de SiO₂,
(c) nettoyage du granulé de SiO₂ par chauffage dans une atmosphère contenant de l'halogène,
(d) vitrification du granulé de SiO₂ nettoyé sous un gaz de traitement, contenant au moins 30 % en vol. d'hélium et/ou d'hydrogène par formation d'un grain de verre de quartz vitrifié, et
(e) post-traitement du grain de verre de quartz vitrifié (15) obtenu après la vitrification selon l'étape (d) du procédé sous une atmosphère contenant moins de 20 % d'hélium ou d'hydrogène à une température de traitement de 300 °C ou plus, et pendant une durée de traitement d'au moins 10 minutes, le nettoyage et la vitrification du granulé de SiO₂ ainsi que le post-traitement du grain de verre de quartz vitrifié se produisant chacun dans un tube rotatif (6) tournant autour d'un axe central (7) d'un four rotatif (1) et le tube rotatif (6) présentant, lors de la vitrification selon l'étape (d) du procédé, une paroi intérieure constituée d'un matériau céramique.

2. Procédé selon la revendication 1, **caractérisé en ce que** la température de surface du grain de verre de quartz vitrifié (15) entre les étapes du procédé de vitrification et de post-traitement ne chute pas au-dessous de 200° C, de préférence pas au-dessous de 800° C.

3. Procédé selon la revendication 1 ou 2, **caractérisé en ce que** le grain de verre de quartz vitrifié (15) est soumis à un post-traitement à une température de traitement de 800 °C ou plus, de préférence pendant une durée de traitement de 15 minutes ou plus.

4. Procédé selon l'une quelconque des revendications précédentes, **caractérisé en ce que** la teneur en hydrogène et en hélium par cm³ de grain de verre de quartz (15) après achèvement du post-traitement est tellement qu'elle occupe un volume de gaz inférieur à 2 cm³ dans des conditions normales.

5. Procédé selon l'une quelconque des revendications précédentes, **caractérisé en ce que** l'on utilise, pour vitrifier le granulé de SiO₂ (9) et procéder au post-traitement du grain verre de quartz (15), un seul et même four rotatif (1), lequel est, vu dans la direction de l'axe central (7), sous-divisé en zones, comprenant une zone de vitrification (13) et une zone de post-traitement (14), de préférence le même four rotatif (1) étant utilisé pour le séchage et le nettoyage du granulé de SiO₂ utilisé, et étant, vu dans la direction de l'axe central (7), sous-divisé en zones, comprenant une zone de séchage et une zone de nettoyage.

6. Procédé selon la revendication 5, **caractérisé en ce que** des zones adjacentes (13 ; 14) du four rotatif (1) sont sous-divisées à l'aide de disques de séparation (12) pourvus d'orifices (20a ; 20b) ou par des obstacles de type labyrinthe, un tube rotatif chauffé en verre de quartz étant, de préférence, prévu pour le nettoyage, un tube rotatif chauffé en céramique pour la vitrification et un tube rotatif chauffé en verre de quartz pour le post-traitement.

7. Procédé selon la revendication 6, **caractérisé en ce que** les tubes rotatifs destinés à la purification et à la vitrification sont chacun chauffés au moyen d'un dispositif de chauffage à résistance (8) entourant le tube rotatif (6) et **en ce que** le tube rotatif utilisé pour le post-traitement ou une plage du tube rotatif (6) utilisée pour le post-traitement n'est pas directement chauffé.

8. Procédé selon l'une quelconque des revendications précédentes, **caractérisé en ce qu'**une fraction fine du granulé de SiO₂ présentant une granulométrie inférieure à 100 µm est préalablement ajusté de façon à représenter moins de 10 % en poids rapporté au poids total du granulé.

9. Procédé selon l'une quelconque des revendications précédentes, **caractérisé en ce que** le nettoyage s'effectue dans le tube rotatif selon l'étape (c) du procédé dans une atmosphère contenant du chlore à une température comprise dans la plage allant de 900 ° à 1250 °C.

10. Procédé selon l'une quelconque des revendications précédentes, **caractérisé en ce que** le gaz de traitement lors de la vitrification selon l'étape (d) de procédé contient au moins 50 % d'hélium et/ou d'hydrogène, de préférence au moins 95 %, les particules de granulé (9) étant de préférence chauffées à une température comprise dans la plage allant de 1300 °C à 1600 °C.

11. Procédé selon la revendication 10, **caractérisé en ce que** les particules de granulé (9) ou le grain de verre de quartz vitrifié (15) sont soumises à une vibration.

12. Procédé selon l'une quelconque des revendications précédentes, **caractérisé en ce que**, lors de la vitrification, un tube rotatif (1) ayant une paroi interne composée d'Al₂O₃, de ZrO₂ ou de Si₃N₄ est utilisé, la substance de la paroi interne du tube rotatif présentant de préférence une teneur en alcalins inférieure à 0,5 %.

13. Procédé selon la revendication 12, **caractérisé en ce que** la paroi interne du tube rotatif se compose d'Al₂O₃ produit de manière synthétique.

14. Procédé selon l'une quelconque des revendications 12 ou 13, **caractérisé en ce qu'**en utilisant un tube rotatif (1) contenant de l'Al₂O₃, on atteint un dopage en Al₂O₃ du grain de verre de quartz vitrifié dans une plage comprise entre 1 et 20 ppm en poids.

15. Procédé selon l'une quelconque des revendications précédentes, **caractérisé en ce que** les particules de granulé (9) présente une granulométrie moyenne comprise dans une plage allant de 20 à 2000 µm, de préférence de 100 µm à 400 µm, à chaque fois, une valeur D₅₀, et de manière particulièrement préférée, une distribution étroite des tailles de particules, le diamètre de la particule attribué à la valeur D₉₀ étant au maximum deux fois plus grande que le diamètre de particule attribué à la valeur D₁₀.
